# EUROPÄISCHE PATENTANMELDUNG

(11) **EP 4 837 724 A2**
(43) Veröffentlichungstag der Anmeldung: **11.11.2026**
(21) Anmeldenummer: 26181093.1
(22) Anmeldetag: 25.06.2024
(51) Int. Cl.: B29C 57/10, B29C 61/06, H01H 85/165

(54) **SCHRUMPFKAPPE UND VERFAHREN ZUM HERSTELLEN EINER SCHRUMPFKAPPE**

(30) Priorität: 24.11.2023 DE 102023132802
(62) Dokumentnummer(n) der früheren Anmeldung(en) nach Art. 76 EPÜ: 24184366.3 / 4 559 662
(71) Anmelder: Hofsaess, Marcel P., 99707 Kyffhäuserland Ortsteil Steintahleben (DE)
(72) Erfinder: Hofsaess, Marcel P., 99707 Kyffhäuserland Ortsteil Steintahleben (DE)
(74) Vertreter: Witte, Weller & Partner Patentanwälte mbB

(57) **Zusammenfassung**

Schrumpfkappe (10) zum Aufschieben auf einen temperaturabhängigen Schalter (12). Die Schrumpfkappe (10) umfasst ein offenes erstes Ende (18) zum Aufschieben auf den Schalter (12) und ein verschlossenes zweites Ende (20), das durch eine Schweiß- oder Prägenaht (22) verschlossen ist, welche sich ausgehend von einer im Bereich des zweiten Endes (20) angeordneten, geschlossenen Stirnseite (24), die sich durch die Schweiß- oder Prägenaht (22) ergibt, erstreckt. Die Schweiß- oder Prägenaht (22) ist derart umgeformt, dass ein umgeformter Teilabschnitt (32) der Schweiß- oder Prägenaht (22) unmittelbar oder unter Zwischenlage eines Fügemittels an der Stirnseite (24) anliegt.

## Beschreibung

Die vorliegende Erfindung betrifft eine Schrumpfkappe sowie ein Verfahren zum Herstellen einer Schrumpfkappe. Die vorliegende Erfindung betrifft darüber hinaus einen temperaturabhängigen Schalter mit einer aufgeschrumpften erfindungsgemäßen Schrumpfkappe.

Eine gattungsgemäße Schrumpfkappe und ein gattungsgemäßes Verfahren zur Herstellung einer solchen Schrumpfkappe ist aus der EP 0 857 562 B1 bekannt.

Derartige Schrumpfkappen werden typischerweise als Schüttgut bereitgehalten und auf zu schützende elektrische Bauteile, wie z.B. temperaturabhängige Schalter, aufgeschoben und dann durch den Einsatz von Heißluft aufgeschrumpft, so dass eine Ummantelung entsteht, durch die das Bauteil vor Schmutz, Feuchtigkeit sowie elektrischem Kontakt mit anderen Bauteilen geschützt wird. Aus dieser Ummantelung ragen dann die Anschlusselemente des Bauteils hervor, die häufig als Anschlusslitzen oder Kabel ausgebildet sind.

Solche Schrumpfkappen werden für gewöhnlich dadurch hergestellt, dass zunächst von einem Schrumpfschlauch Schrumpfschlauchabschnitte abgelängt werden und dann an einem ihrer beiden Enden eine Schweiß- oder Prägenaht erzeugt wird. Hierzu wird der Schrumpfschlauchabschnitt an dem genannten Ende zusammengedrückt und bspw. mit Hilfe zweier Schweißstempel, die von gegenüberliegenden Seiten aus auf das Ende des Schrumpfschlauchabschnitts mittels Druck und Hitze und einwirken, die Schweiß- oder Prägenaht erzeugt.

Da die Schweiß- oder Prägenaht durch Zusammendrücken eines Schrumpfschlauchendes und Fügen der dadurch aufeinandergedrückten Schrumpfschlauch-Längshälften erzeugt wird, hat die Schweiß- oder Prägenaht typischerweise in etwa die doppelte Wandstärke des übrigen Schrumpfschlauches. Dadurch entsteht eine vergleichsweise steife und starre Schweiß- oder Prägenaht.

Die Schweiß- oder Prägenaht steht von einer geschlossenen Stirnseite, welche durch die Schweiß- oder Prägenaht an dem Schrumpfschlauch bzw. der Schrumpfkappe erzeugt wird, ab. Fertigungsbedingt ergibt sich entlang des freien, abstehenden Endes des Schweiß- oder Prägenaht ein meist sehr scharfkantiger Rand. Dieser scharfkantige Rand bleibt beim Aufschrumpfen der Schrumpfkappen auf die zu schützenden Bauteile erhalten.

Sowohl bei der Konfektionierung der Bauteile mit den Schrumpfkappen als auch bei der Weiterverarbeitung der mit den Schrumpfkappen versehenen Bauteile erfolgen viele Verfahrensschritte typischerweise von Hand, wobei die diese Verfahrensschritte durchführenden Personen sehr feinmotorische Arbeiten durchführen müssen, so dass diese keine Schutzhandschuhe tragen können.

Wegen der scharfkantigen Ränder der Schweiß- oder Prägenahten kommt es deshalb bei dieser Art von Handarbeiten immer wieder zu Verletzungen der Personen, was selbstverständlich einen großen Nachteil darstellt.

Um diese Verletzungen zu vermeiden, greifen die Personen daher die ummantelten Bauteile häufig nicht an der Schrumpfkappe selbst, sondern an den Anschlussleitungen, was bei den weiter erforderlichen Manipulationen jedoch häufig dazu führt, dass die Verbindung zwischen der Anschlussleitung und dem ummantelten Bauteil geschwächt oder gar ganz zerstört wird, so dass das aus solchen Bauteilen gefertigte Gerät häufig Fehlfunktionen aufweist.

Insbesondere dann, wenn die Bauteile temperaturabhängige Schalter sind, die z.B. eine Spule vor Erhitzung schützen sollen, werden die mit den Schrumpfkappen ummantelten Schalter unmittelbar in Anlage mit der Spule z.B. von Elektromotoren gebracht. Die Schalter werden elektrisch zu der Spule in Reihe geschaltet und unterbrechen den Stromkreis, wenn die Temperatur der Spule einen vorgegebenen Wert übersteigt. Hierzu ist im Inneren des temperaturabhängigen Schalters in an sich bekannter Weise ein Bimetall-Schaltwerk angeordnet.

Damit diese Schutzfunktion sicher erfüllt werden kann, ist es erforderlich, den Schalter im Inneren der Spule anzuordnen oder zumindest sehr dicht an die Spule heranzubringen. Der scharfkantige Rand der Schrumpfkappe kann dabei auch zu Schäden an der Spule führen, was selbstverständlich ebenso nachteilhaft ist.

Gemäß der EP 0 857 562 B1 werden die zuvor genannten Probleme dadurch gelöst, dass die Schrumpfkappe nach dem Erzeugen der Schweiß- oder Prägenaht nochmals nachbehandelt wird. Bei dieser Nachbehandlung wird die Schweiß- oder Prägenaht mit Hilfe eines Formstempels umgebogen. Durch dieses Umbiegen wird das scharfkantige, freie Ende der Schweiß- oder Prägenaht sozusagen eingerollt oder eingeklappt, damit dieses nicht mehr stirnseitig nach vorne in gerader Weise von der Schrumpfkappe absteht.

Durch diese Maßnahme lassen sich die oben genannten Probleme einer Verletzungsgefahr von Personen und einer Beschädigungsgefahr anderer Bauteile wirksam verhindern.

Es besteht dennoch weiterhin Verbesserungspotential in der Herstellung derartiger Schrumpfkappen. Beispielsweise hat es sich gezeigt, dass Schrumpfkappen, deren Schweiß- oder Prägenahten derart um 90° oder mehr umgebogen sind, wie es in der EP 0 857 562 B1 beschrieben ist, mechanisch instabiler werden und dadurch leichter abbrechen können. Dies wiederum kann zu offenen Stellen in der Schrumpfkappe führen, wodurch die Schutzfunktion der Schrumpfkappe grundsätzlich verlorengehen kann. Zudem kann dadurch die Spannungs- bzw. Hochspannungsfestigkeit der Schrumpfkappe, welche insbesondere bei der Verwendung an temperaturabhängigen Schaltern eine wichtige Eigenschaft ist, die durch die Schrumpfkappe gewährleistet sein muss, beeinträchtigt werden.

Es ist daher eine Aufgabe der vorliegenden Erfindung eine Schrumpfkappe sowie ein Verfahren zur Herstellung einer solchen Schrumpfkappe bereitzustellen, mit der bzw. dem sich die oben genannten Probleme ausräumen oder zumindest verringern lassen. Dabei ist es insbesondere eine Aufgabe die Gefahr der Beschädigung oder Verletzung, welche durch solche Schrumpfkappen ausgehen kann, zu verringern und gleichzeitig eine mechanisch stabile, dichte und hochspannungsfeste Schrumpfkappe zu gewährleisten.

Diese Aufgabe wird erfindungsgemäß durch eine Schrumpfkappe zum Aufschieben auf einen temperaturabhängigen Schalter gelöst, wobei die Schrumpfkappe ein offenes erstes Ende zum Aufschieben auf den Schalter und ein verschlossenes zweites Ende aufweist, das durch eine Schweiß- oder Prägenaht verschlossen ist, welche sich ausgehend von einer im Bereich des zweiten Endes angeordneten, geschlossenen Stirnseite, die sich durch die Schweiß- oder Prägenaht ergibt, erstreckt, wobei die Schweiß- oder Prägenaht derart umgeformt ist, dass ein umgeformter Teilabschnitt der Schweiß- oder Prägenaht unmittelbar oder mittelbar unter Zwischenlage eines Fügemittels an der Stirnseite anliegt.

Gemäß einem weiteren Aspekt der vorliegenden Erfindung wird die oben genannte Aufgabe durch ein Verfahren zum Herstellen einer Schrumpfkappe gelöst, mit den Schritten:
a) Bereitstellen eines Schrumpfschlauchabschnitts, der an seinem ersten Ende eine erste Öffnung und an seinem zweiten Ende eine zweite Öffnung aufweist,
b) Zusammendrücken des Schrumpfschlauchabschnitts an seinem zweiten Ende und Erzeugen einer Schweiß- oder Prägenaht, um die zweite Öffnung zu verschließen und im Bereich des zweiten Endes eine geschlossene Stirnseite zu erzeugen, gekennzeichnet durch den weiteren Schritt:
c) Umformen eines Teilabschnitts der Schweiß- oder Prägenaht derart, dass der umgeformte Teilabschnitt der Schweiß- oder Prägenaht unmittelbar oder unter Zwischenlage eines Fügemittels an der Stirnseite anliegt.

Anders als es in der EP 0 857 562 B1 vorgeschlagen ist, ist die Schweiß- oder Prägenaht erfindungsgemäß nicht nur auf die Stirnseite der Schrumpfkappe zu um 90° oder mehr umgebogen, eingeklappt oder eingerollt, sondern derart umgeformt, dass diese zumindest teilweise an der Stirnseite anlegt. Vorzugsweise wird die Schweiß- oder Prägenaht um ca. 90° umgeklappt und derart an die Stirnseite der Schrumpfkappe angelegt, dass zumindest ein Teilabschnitt der Schweiß- oder Prägenaht unmittelbar oder mittelbar unter Zwischenlage eines Fügemittels an der Stirnseite der Schrumpfkappe anliegt.

Dies hat mehrere Vorteile: Zum einen wird die Schrumpfkappe und damit auch das Bauteil (z.B. der temperaturabhängige Schalter), auf das die Schrumpfkappe aufgebracht wird, weiterhin verkürzt. Diese geringere Baugröße ist sowohl in Bezug auf die Schüttgut-Lagerhaltung der Schrumpfkappe als auch in Bezug auf das Handling und die Einbaumöglichkeiten der Schrumpfkappe von Vorteil. Zum anderen hat sich gezeigt, dass durch das Anlegen der Schweiß- oder Prägenaht an die Stirnseite der Schrumpfkappe die Verletzungs- und Beschädigungsgefahr weiter verringert wird, da der scharfkantige Rand der Schweiß- oder Prägenaht vollständig an die Stirnseite der Schrumpfkappe angelegt werden kann, so dass diese von der Schrumpfkappe gar nicht mehr absteht und damit kaum mehr zugänglich ist. Des Weiteren hat sich gezeigt, dass dadurch eine Art Doppel- bzw. Mehrwandigkeit an der Stirnseite der Schrumpfkappe entsteht, da die daran anliegende Schweiß- oder Prägenaht die Wandstärke an der Stirnseite der Schrumpfkappe zusätzlich vergrößert. Dies wiederum erzeugt nicht nur weitere mechanische Stabilität. Erste Versuche der Anmelderin haben auch gezeigt, dass hierdurch die Hochspannungsfestigkeit der Schrumpfkappe enorm verbessert werden kann. Während herkömmliche Schrumpfkappen eine Hochspannungsfestigkeit im Bereich von 1,5-2,5 kV zeigen, kann mit der erfindungsgemäßen Schrumpfkappe eine Hochspannungsfestigkeit von 3,5 kV oder mehr realisiert werden.

Die oben genannte Aufgabe ist somit vollständig gelöst.

Gemäß einer Ausgestaltung weist die Schweiß- oder Prägenaht ein freies Ende sowie einen an die Stirnseite angrenzenden Endabschnitt auf, wobei sich der an der Stirnseite unmittelbar oder mittelbar unter Zwischenlage eines Fügemittels anliegende, umgeformte Teilabschnitt der Schweiß- oder Prägenaht über einen Bereich zwischen dem freien Ende und dem an die Stirnseite angrenzenden Endabschnitt erstreckt.

Die Schweiß- oder Prägenaht liegt also vorzugsweise zumindest mit einem mittleren Teilabschnitt, der sich zwischen dem freien Ende und dem an die Stirnseite angrenzenden Endabschnitt erstreckt, an der Stirnseite der Schrumpfkappe an.

Gemäß einer weiteren Ausgestaltung ist es bevorzugt, dass mehr als 50% der Fläche einer an der Stirnseite anliegenden Seite der Schweiß- oder Prägenaht an der Stirnseite unmittelbar oder mittelbar unter Zwischenlage eines Fügemittels anliegt.

Mit anderen Worten ist es bevorzugt, dass ein Großteil der Schweiß- oder Prägenaht an der Stirnseite der Schrumpfkappe anliegt. Hierdurch wird die mechanische Stabilität und die Hochspannungsfestigkeit der Schrumpfkappe weiter verbessert.

Besonders bevorzugt liegt die Schweiß- oder Prägenaht vollständig an der Stirnseite, unmittelbar oder mittelbar unter Zwischenlage eines Fügemittels, an.

Die Schweiß- oder Prägenaht wird hierzu vorzugsweise um 90° umgebogen und mit einer Seite gesamthaft an die Stirnseite der Schrumpfkappe angelegt. Vorzugsweise steht die Schweiß- oder Prägenaht dabei auch nicht über den äußeren Rand oder Umfang der Schrumpfkappe ab. Auf diese Weise ist für die größtmögliche mechanische Stabilität und Hochspannungsfestigkeit gesorgt. Gleichzeitig ist die Verletzungsgefahr und Beschädigungsgefahr, die von der Schrumpfkappe ausgeht, auf ein Minimum reduziert.

Gemäß einer weiteren Ausgestaltung ist der umgeformte Teilabschnitt der Schweiß- oder Prägenaht an die Stirnseite angepresst.

Hierdurch ergibt sich vorzugsweise eine nahtlose, im Wesentlichen faltenfreie, an die Stirnseite der Schrumpfkappe angelegte Schweiß- oder Prägenaht. Vorzugsweise wird der Teilabschnitt oder die gesamte Schweiß- oder Prägenaht durch Erhitzen, sei es durch Heißluft von außen und/oder einen heißen Formstempel, warm- bzw. heißumgeformt und dann an die Stirnseite der Schrumpfkappe angepresst. Hierdurch entsteht eine sehr kompakte Schrumpfkappe, die insbesondere in ihrem Bereich der Stirnseite eine hohe Stabilität und Hochspannungsfestigkeit aufweist.

Gemäß einer weiteren Ausgestaltung ist der umgeformte Teilabschnitt der Schweiß- oder Prägenaht stoffschlüssig an der Stirnseite befestigt.

Beispielsweise wird die Schweiß- oder Prägenaht nach deren Erzeugen und Umformen mit dem umgeformten Teilabschnitt an der Stirnseite der Schrumpfkappe angeklebt oder angeschweißt. Hierdurch wird sichergestellt, dass der umgeformte Teilabschnitt der Schweiß- oder Prägenaht dauerhaft an der Stirnseite anliegen bleibt, da er nochmals zusätzlich an dieser befestigt ist.

Gemäß einer weiteren Ausgestaltung ist die Stirnseite der Schrumpfkappe konvex gewölbt. Besonders bevorzugt ist die Stirnseite in einem Längsschnitt der Schrumpfkappe betrachtet bogenförmig ausgestaltet.

Hierdurch wird die Verletzungs- und Beschädigungsgefahr, die von der Schrumpfkappe ausgeht, zusätzlich minimiert. Zudem ist diese Form insbesondere für die Aufnahme von meist zylindrisch bzw. rund ausgestalteten temperaturabhängigen Schaltern besonders geeignet.

Gemäß einer weiteren Ausgestaltung verläuft der umgeformte Teilabschnitt der Schweiß-oder Prägenaht annähernd parallel zu der bogenförmig konvex gewölbten Stirnseite.

Der umgeformte Teilabschnitt der Schweiß- oder Prägenaht schmiegt sich dadurch also quasi wie eine zweite Wand an die Stirnseite der Schrumpfkappe an. Auch hierdurch wird die Kompaktheit, mechanische Stabilität, Hochspannungsfestigkeit und Steifigkeit der Schrumpfkappe nochmals verbessert.

Gemäß einer weiteren Ausgestaltung ist die Schrumpfkappe in einem Bereich zwischen dem ersten und dem zweiten Ende im Wesentlichen spiegelsymmetrisch zu einer ersten Symmetrieebene, wobei die Schweiß- oder Prägenaht an ihrem an die Stirnseite angrenzenden Endabschnitt versetzt zu der ersten Symmetrieebene angeordnet ist.

Die Schweiß- oder Prägenaht wird also mit anderen Worten nicht mittig in der Symmetrieebene des Schrumpfschlauchabschnitts, aus dem die Schrumpfkappe hergestellt wird, erzeugt, sondern außermittig versetzt zu dieser ersten Symmetrieebene. Dies hat den Vorteil, dass die Schweiß- oder Prägenaht relativ großflächig ausgestaltet sein kann und dennoch nach dem Umbiegen und Anlegen an der Stirnseite seitlich nicht über die Ränder der Schrumpfkappe absteht. Auch wenn die Schweiß- oder Prägenaht vollständig mit einer ihrer Seiten an die Stirnseite der Schrumpfkappe angelegt wird, steht sie dann dennoch nicht seitlich, also in einer Richtung quer zu der ersten Symmetrieebene, über die Stirnseite hinaus ab. Das freie, meist scharfkantige Ende der Schweiß- oder Prägenaht steht somit seitlich nicht von der Stirnseite der Schrumpfkappe hervor. Ein nachträgliches Abschneiden bzw. Kürzen der Schweiß- oder Prägenaht kann dadurch entfallen.

All dies lässt sich durch die außermittige bzw. versetzte Anordnung der Schweiß- oder Prägenaht auch dann ermöglichen, wenn die Schweiß- oder Prägenaht relativ großflächig ausgestaltet ist. Eine großflächige Ausgestaltung der Schweiß- oder Prägenaht vergrößert die Dichtigkeit der Fügestelle und erleichtert das Handling beim Erzeugen der Schweiß-oder Prägenaht.

Vorzugsweise ist eine Fügefläche der Schweiß- oder Prägenaht in dem an die Stirnseite angrenzenden Endabschnitt der Schweiß- oder Prägenaht parallel versetzt zu der ersten Symmetrieebene.

Mit der "Fügefläche" ist hier die Fläche gemeint, entlang der die beiden Schrumpfschlauch-Längshälften, welche beim Erzeugen der Schweiß- oder Prägenaht aufeinandergedrückt und miteinander gefügt werden, verbunden sind. Diese Fügefläche oder Fügeebene verläuft nach dem Erzeugen der Schweiß- oder Prägenaht gesamthaft parallel versetzt zu der ersten Symmetrieebene. Da dann jedoch erfindungsgemäß ein Teilabschnitt der Schweiß- oder Prägenaht umgeformt und an die Stirnseite der Schrumpfkappe angelegt wird, bezieht sich die zuvor genannte Definition der parallel versetzten Anordnung der Fügefläche "nur" auf den an die Stirnseite angrenzenden bzw. den an der Stirnseite angeordneten Endabschnitt der Schweiß- oder Prägenaht.

Gemäß einer weiteren Ausgestaltung hat die Stirnseite eine orthogonal zu der ersten Symmetrieebene gemessene Höhe, wobei die Schweiß- oder Prägenaht an ihrem an die Stirnseite angrenzenden Endabschnitt um mindestens 1/10 der Höhe, vorzugsweise mindestens 1/5 der Höhe, parallel versetzt zu der ersten Symmetrieebene angeordnet ist.

Damit ist es möglich, dass die Schweiß- oder Prägenaht in ihrem an die Stirnseite angelegten Zustand eine orthogonal zu der ersten Symmetrieebene gemessene Höhe hat, welche größer als die Hälfte der Höhe der Stirnseite ist und dabei dennoch nicht über die Stirnseite hinaus seitlich absteht.

Wie erwähnt, beziehen sich die oben genannten und die in den Ansprüchen definierten Ausgestaltungen nicht nur auf die Schrumpfkappe selbst, sondern auch auf einen temperaturabhängigen Schalter mit einer solchen aufgeschrumpften Schrumpfkappe. Ebenso beziehen sich diese Ausgestaltungen auch auf das erfindungsgemäße Verfahren zum Herstellen der Schrumpfkappe. Damit ergeben sich insbesondere die folgenden weiteren Ausgestaltungen für das erfindungsgemäße Herstellungsverfahren:

Gemäß einer Ausgestaltung wird der Teilabschnitt der Schweiß- oder Prägenaht in Schritt c) derart umgeformt, dass mehr als 50 % der Fläche einer an der Stirnseite anliegenden Seite der Schweiß- oder Prägenaht an der Stirnseite unmittelbar oder unter Zwischenlage eines Fügemittels anliegt.

Gemäß einer weiteren Ausgestaltung wird der Teilabschnitt der Schweiß- oder Prägenaht in Schritt c) derart umgeformt, dass die Schweiß- oder Prägenaht vollständig an der Stirnseite, unmittelbar oder unter Zwischenlage eines Fügemittels, anliegt.

Gemäß einer weiteren Ausgestaltung wird der Teilabschnitt der Schweiß- oder Prägenaht in Schritt c) oder nach Schritt c) an die Stirnseite angepresst. Vor oder während dieses Pressvorgangs wird die Schweiß- oder Prägenaht vorzugsweise erhitzt, um diese leichter umformen zu können.

Gemäß einer weiteren Ausgestaltung wird der Teilabschnitt der Schweiß- oder Prägenaht in Schritt c) oder nach dem Schritt c) stoffschlüssig an der Stirnseite befestigt.

Gemäß einer weiteren Ausgestaltung wird der Teilabschnitt der Schweiß- oder Prägenaht in Schritt c) derart umgeformt, dass der umgeformte Teilabschnitt annähernd parallel zu der Stirnseite verläuft.

Gemäß einer weiteren Ausgestaltung wird die Schweiß- oder Prägenaht in Schritt b) parallel versetzt zu einer ersten Symmetrieebene des Schrumpfschlauchabschnitts erzeugt.

Gemäß einer weiteren Ausgestaltung wird die Schweiß- oder Prägenaht in Schritt b) derart versetzt zu der ersten Symmetrieebene des Schrumpfschlauchabschnitts erzeugt, dass die in Schritt b) erzeugte Schweiß- oder Prägenaht im Wesentlichen spiegelsymmetrisch zu einer zweiten Symmetrieebene ist, die parallel versetzt zu der ersten Symmetrieebene ist.

Gemäß einer weiteren Ausgestaltung wird die Schweiß- oder Prägenaht in Schritt b) derart versetzt zu der ersten Symmetrieebene des Schrumpfschlauchabschnitts erzeugt, dass die in Schritt b) erzeugte Schweiß- oder Prägenaht im Wesentlichen spiegelsymmetrisch zu einer zweiten Symmetrieebene ist, die um 1/10 einer orthogonal zu der ersten Symmetrieebene gemessenen Höhe, vorzugsweise mindestens 1/5 der Höhe, versetzt zu der ersten Symmetrieebene ist.

Gemäß einer weiteren Ausgestaltung wird die Schweiß- oder Prägenaht in Schritt c) derart umgeformt, dass ein freies Ende der Schweiß- oder Prägenaht in eine Richtung orthogonal zu der ersten Symmetrieebene nicht über die Stirnseite absteht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmend er vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung einer Schrumpfkappe zum Stand der Technik in mehreren Ansichten;
- Fig. 2A: eine Seitenansicht einer Schrumpfkappe gemäß einem ersten Ausführungsbeispiel der vorliegenden Erfindung;
- Fig. 2B: eine Schnittansicht der in Fig. 2A gezeigten Schrumpfkappe;
- Fig. 3A: eine Seitenansicht einer Schrumpfkappe gemäß einem zweiten Ausführungsbeispiel der vorliegenden Erfindung;
- Fig. 3B: eine Schnittansicht der in Fig. 3A gezeigten Schrumpfkappe;
- Fig. 4: eine Seitenansicht sowie eine Draufsicht von vorne auf eine Schrumpfkappe gemäß einem dritten Ausführungsbeispiel, wobei die Schrumpfkappe hier in einem während der Produktion auftretenden Zwischenzustand gezeigt ist;
- Fig. 5A: eine Seitenansicht der Schrumpfkappe gemäß dem dritten Ausführungsbeispiel, wobei die Schrumpfkappe hier in ihrem fertiggestellten Endzustand gezeigt ist;
- Fig. 5B: eine Schnittansicht der in Fig. 5A gezeigten Schrumpfkappe; und
- Fig. 6: mehrere schematisch angedeutete Verfahrensschritte zur Herstellung der erfindungsgemäßen Schrumpfkappe.

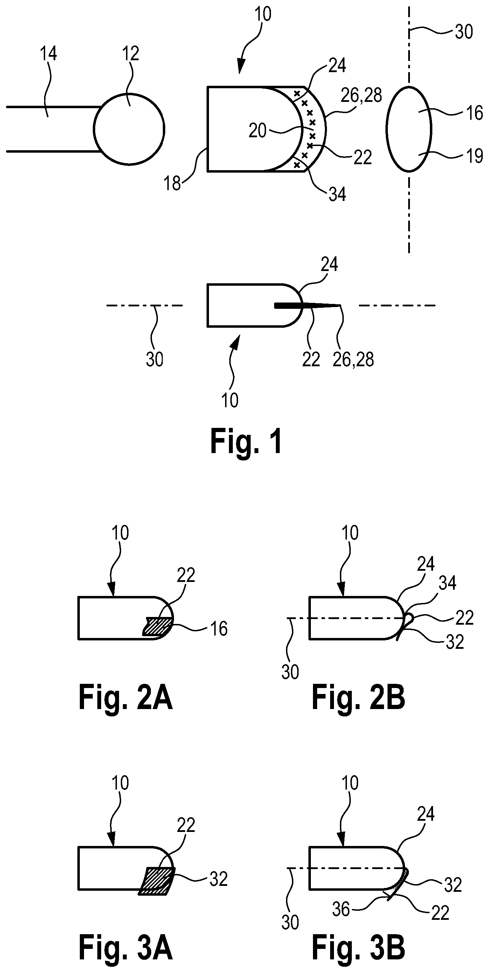

Fig. 1 zeigt eine Schrumpfkappe gemäß dem Stand der Technik in verschiedenen schematischen Darstellungen. Die Schrumpfkappe ist darin gesamthaft mit der Bezugsziffer 10 bezeichnet.

Die in Fig. 1 gezeigte Schrumpfkappe 10 kann auch als Zwischenzustand während der Herstellung der erfindungsgemäßen Schrumpfkappe 10 angesehen werden. Mit anderen Worten wird die erfindungsgemäße Schrumpfkappe 10, die nachfolgend noch im Detail erläutert ist, zunächst auf herkömmliche Art und Weise hergestellt, im Vergleich zu dem bisher aus dem Stand der Technik bekannten Schrumpfkappen jedoch auf andere Art und Weise weiterverarbeitet.

Die Schrumpfkappe 10 dient insbesondere zur Aufnahme eines temperaturabhängigen Schalters 12, dessen Außenanschlüsse 14 hier vereinfacht als Anschlusslitzen gezeigt sind. Derartige temperaturabhängige Schalter 12 dienen zur Überwachung elektrischer Geräte. Sie dienen insbesondere dazu, das zu überwachende elektrische Gerät im Falle einer Überhitzung stromlos zu schalten. Hierzu weist der Schalter 12 ein in der Regel im Inneren des Schalter-Gehäuses verbautes, temperaturabhängiges Schaltwerk auf, das ein Bimetallteil umfasst. Dieses Bimetallteil ändert beim Überschreiten einer Ansprechtemperatur seine Form, wodurch das Schaltwerk aus seiner geschlossenen Stellung in seine geöffnete Stellung gebracht wird. Der Stromkreis, in dem der Schalter 12 verbaut ist, ist dann geöffnet. Kühlt anschließend das zu überwachende Gerät wieder unter eine sog. Rücksprungtemperatur des Bimetallteils ab, so springt dieses wiederum in seine Ausgangsstellung zurück, wodurch der Schalter wieder in seine geschlossene Stellung gebracht wird. Auf diese Weise ist ein temperaturabhängiges Schaltverhalten des Schalters 12 realisiert.

Die erfindungsgemäße Schrumpfkappe 10 dient insbesondere dem äußeren Schutz sowie der elektrischen Abschirmung des Schalters 12. Die Schrumpfkappe 10 wird über den Schalter 12 gestülpt und an diesem angebracht bzw. auf diesen aufgeschrumpft, so dass die Schrumpfkappe 10 den Schalter 12 im Endzustand allseitig umhüllt.

Es versteht sich jedoch, dass die erfindungsgemäße Schrumpfkappe 10 grundsätzlich auch zur Aufnahme anderer Bauteile geeignet ist und nicht auf die Aufnahme eines temperaturabhängigen Schalters, wie dies vorliegend gezeigt ist, beschränkt ist.

Die Schrumpfkappe 10, deren Profil im Querschnitt bei 16 gezeigt ist, wird mit ihrem ersten Ende 18 auf den Schalter 12 aufgeschoben und dann durch Einsatz heißer Luft aufgeschrumpft, so dass aus der so gebildeten Ummantelung nur noch die Außenanschlüsse 14 herausragen. Das erste Ende 18 ist daher als offenes Ende ausgestaltet, welches eine erste Öffnung 19 aufweist.

Das dem ersten Ende 18 gegenüberliegende zweite Ende 20 der Schrumpfkappe 10 ist verschlossen. Hier weist die Schrumpfkappe 10 eine im Bereich des zweiten Endes 20 ausgebildete Schweiß- oder Prägenaht 22 auf. Durch diese Schweiß- oder Prägenaht 22 wird die Schrumpfkappe 10 im Bereich ihres zweiten Endes 20 vollständig verschlossen. Aufgrund der Schweiß- oder Prägenaht 22 weist die Schrumpfkappe 10 im Bereich ihres zweiten Endes 20 eine geschlossene Stirnseite 24 auf, welche an die Schweiß- oder Prägenaht 22 angrenzt.

Herstellungsbedingt ist die Schweiß- oder Prägenaht 22 als Falz oder Kante ausgebildet, der bzw. die von der Stirnseite 24 der Schrumpfkappe 10 gerade absteht. Dieser Falz bzw. diese Kante ist vergleichsweise biegesteif oder starr und weist an ihrem vorderen, stirnseitigen, freien Ende 26 einen relativ scharfen Rand 28 auf.

Der stirnseitige, freie, vordere Rand 28 der Schweiß- oder Prägenaht 22 ist in der Draufsicht von oben bogenförmig gekrümmt (siehe mittlerer oberer Teil der Fig. 1). Dies ist ebenfalls herstellungsbedingt, da die Schrumpfkappe 10, wie nachfolgend im Detail erläutert ist, zur Herstellung der Schweiß- oder Prägenaht 22 im Bereich ihres zweiten Endes 20 durch Zusammendrücken und anschließendes Verschweißen oder Verprägen eines zunächst noch offenen Endabschnitts (einer Öffnung 21) eines zylinderförmigen Schrumpfschlauchs hergestellt wird.

Bei 16 ist die Schrumpfkappe 10 im Querschnitt oval bzw. elliptisch dargestellt. Die Schrumpfkappe 10 kann im Querschnitt betrachtet jedoch auch annähernd rund sein. Das für die Schrumpfkappe 10 verwendete Ausgangsmaterial in Form eines Schrumpfschlauchs ist typischerweise im Querschnitt rund bzw. kreisförmig, also insgesamt kreiszylindrisch ausgestaltet.

Die sich durch die Schweiß- oder Prägenaht 22 ergebende Stirnseite 24 der Schrumpfkappe 10 ist konvex ausgebildet, so wie dies insbesondere aus der Draufsicht von oben im mittleren oberen Teil der Fig. 1 sowie aus der Seitenansicht im unteren Teil der Fig. 1 ersichtlich ist. Es versteht sich, dass die hier gezeigte Form der Stirnseite 24 schematisiert dargestellt ist. In der Praxis ist diese Stirnseite 24 zwar meist bogenförmig konvex ausgestaltet, jedoch typischerweise nicht exakt so rund und regelmäßig, wie sie in den vorliegenden Figuren gezeigt ist. Herstellungsbedingt ergibt sich jedoch, wie erwähnt, eine derartige bogenförmige Rundung bzw. Wölbung der Stirnseite 24. Je nach Form des Schalters 12, auf dem die Schrumpfkappe 10 aufgeschrumpft werden soll, kann die Stirnseite 24 jedoch auch eckig oder annähernd plan geformt sein und die Schweiß- oder Prägenaht 22 entlang einer geraden Linie verlaufen. Eine runde bzw. bogenförmige Schweiß-oder Prägenaht 22 ist jedoch für die Aufnahme eines meist runden Schalters 12 vorteilhaft.

Fig. 1 zeigt den Zustand der Schrumpfkappe 10 nach dem Erzeugen der Schweiß- oder Prägenaht 22. Dieser Zustand entspricht dem Endzustand der allermeisten im Stand der Technik zur Ummantelung von temperaturabhängigen Schaltern verwendeten Schrumpfkappen. In diesem Zustand ist die Schrumpfkappe 10 im Wesentlichen spiegelsymmetrisch zu einer ersten Symmetrieebene ausgestaltet, die in Fig. 1 mit der Bezugsziffer 30 angedeutet ist. Das Wort "im Wesentlichen spiegelsymmetrisch" wird vorliegend verwendet, um anzudeuten, dass in der Praxis typischerweise keine absolut exakte Spiegelsymmetrie besteht. Grundsätzlich ist diese Spiegelsymmetrie jedoch vorhanden und die herstellungsbedingten, in der Praxis auftretenden, kleineren Abweichungen, welche typischerweise im Millimeter- oder Zehntelbereich sind, lassen sich vernachlässigen.

Die im Stand der Technik verwendeten Schrumpfkappen 10 bergen, wenn sie in dem in Fig. 1 gezeigten Zustand verwendet und nicht weiterverarbeitet werden, aufgrund des relativ scharfen Randes 28 am stirnseitigen Ende 26 der Schweiß- oder Prägenaht 22 ein vergleichsweise großes Verletzungsrisiko für Menschen und Beschädigungsrisiko für Teile der Maschinen, in denen die temperaturabhängigen Schalter 12 mitsamt ihren Schrumpfkappen 10 verbaut werden.

Erfindungsgemäß wird die Schrumpfkappe 10 daher ausgehend von dem in Fig. 1 gezeigten Zwischenzustand weiterverarbeitet. Hierbei wird die Schweiß- oder Prägenaht 22 derart umgeformt, dass zumindest ein umgeformter Teilabschnitt 32 der Schweiß- oder Prägenaht 22 an der Stirnseite 24 der Schrumpfkappe 10 anliegt. Die Schweiß- oder Prägenaht 22 wird mit anderen Worten also um ca. 90° oder etwas mehr umgebogen und zumindest abschnittsweise an die Stirnseite 24 angelegt. Der an die Stirnseite 24 der Schrumpfkappe 10 angelegte, umgeformte Teilabschnitt 32 der Schweiß- oder Prägenaht 22 liegt entweder unmittelbar oder mittelbar unter Zwischenlage eines Fügemittels an der Stirnseite 24 an.

In Fig. 2A, 2B, 3A und 3B, sind zwei verschiedene Ausführungsbeispiele der erfindungsgemäßen Schrumpfkappe 10 in ihrem fertig verarbeiteten Endzustand gezeigt. Fig. 2A und 3A zeigen die Schrumpfkappen 10 jeweils in einer Seitenansicht. Fig. 2B und 3B zeigen die Schrumpfkappen 10 jeweils in einer Längsschnittansicht. Die Schnittebene ist dabei jeweils senkrecht zu der in Fig. 1 gestrichelt angedeuteten ersten Symmetrieebene 30.

Wie aus Fig. 2 und 3 ersichtlich ist, ist die erfindungsgemäße Schrumpfkappe 10 in ihrem Endzustand nun nicht mehr als Ganzes spiegelsymmetrisch zu der ersten Symmetrieebene 30. Der linke Teil der Schrumpfkappe 10 ist jedoch nach wie vor im Wesentlichen spiegelsymmetrisch zu der ersten Symmetrieebene 30. Mit anderen Worten ist die fertiggestellte Schrumpfkappe 10 abgesehen von der Schweiß- oder Prägenaht 22 im Wesentlichen spiegelsymmetrisch zu der ersten Symmetrieebene 30.

In dem in Fig. 2A und 2B gezeigten ersten Ausführungsbeispiel ist die Schweiß- oder Prägenaht 22 umgeklappt und abschnittsweise an der Stirnseite 24 der Schrumpfkappe 10 angeklebt. Im Bereich des an die Stirnseite 24 angrenzenden Endabschnitts 34 der Schweiß- oder Prägenaht 22 kann sich durch das Umklappen der Schweiß- oder Prägenaht 22 eine kleinere Wulst ergeben, die nach vorne von der Stirnseite 24 leicht absteht. Insgesamt wird die Schrumpfkappe 10 durch das Umklappen und Anlegen der Schweiß-oder Prägenaht 22 an die Stirnseite 24 in ihrer effektiven Länge jedoch deutlich verkürzt. Zudem steht der scharfe Rand 28 der Schweiß- oder Prägenaht 22 nicht mehr nach vorne hin stirnseitig von der Schrumpfkappe 10 ab. Das Verletzungs- und Beschädigungsrisiko ist somit deutlich verringert. Ebenso ergibt sich im Bereich der umgeklappten Schweiß-oder Prägenaht 22 eine verbesserte Hochspannungsfestigkeit der Schrumpfkappe 10, da die Schweiß- oder Prägenaht 22 in diesem Teilabschnitt 32 sozusagen eine weitere Schicht erzeugt, durch die die Wandstärke und damit auch die Hochspannungsfestigkeit der Schrumpfkappe vergrößert wird.

In dem in Fig. 3A und 3B gezeigten zweiten Ausführungsbeispiel ist die Schweiß- oder Prägenaht 22 nahezu vollständig oder zumindest mit einem größeren Teilabschnitt als gemäß dem zweiten Ausführungsbeispiel (vgl. Fig. 2A und 2B) an die Stirnseite 24 der Schrumpfkappe angelegt. Vorzugsweise ist die Schweiß- oder Prägenaht 22 an die Stirnseite 24 angepresst. Hierdurch ergibt sich vorzugsweise eine nahtlose, im Wesentlichen faltenfreie, an die Stirnseite 24 der Schrumpfkappe 10 angelegte Schweiß- oder Prägenaht 22. Die beschriebene Art der Umformung der Schweiß- oder Prägenaht 22 erfolgt, wie nachfolgend im Detail erläutert ist, vorzugsweise unter Hitzeeinwirkung.

Je nach Anwendungszweck kann es bevorzugt sein, den an die Stirnseite 24 angelegten Teilabschnitt 32 der Schweiß- oder Prägenaht 22 lose an die Stirnseite anzulegen oder mit dieser durch einen zusätzlichen Schweiß- oder Klebevorgang stoffschlüssig zu verbinden.

Besonders bevorzugt liegt der umgeformte Teilabschnitt 32 der Schweiß- oder Prägenaht 22 gemäß dem in Fig. 3A und 3B gezeigten zweiten Ausführungsbeispiel zumindest größtenteils (also mit mehr als 50 % der Fläche), der auf die Stirnseite 24 umgeklappten Unterseite 36 an der Stirnseite 24 an.

Da die Schweiß- oder Prägenaht 22 je nach Größe in dem in Fig. 1 gezeigten Ausgangszustand durchaus weit von der Stirnseite 24 abstehen kann, kann das Umklappen und Anlegen der Schweiß- oder Prägenaht 22 dazu führen, dass diese nach unten hin bzw. seitlich von der Schrumpfkappe 10 absteht, wie dies insbesondere aus Fig. 3B ersichtlich ist. Um eine Verletzungs- und/oder Beschädigungsgefahr gänzlich zu vermeiden, ist es dann von Vorteil, die Schweiß- oder Prägenaht 22 im Bereich ihres stirnseitigen Endes 26 abzulängen bzw. abzuschneiden. Dies kann jedoch den Nachteil haben, dass hierdurch Undichtigkeiten entstehen, welche den vollständigen Verschluss der Schrumpfkappe 10 im Bereich des zweiten Endes 20 beeinträchtigen. So können bspw. Risse oder Löcher in der Schweiß- oder Prägenaht 22 entstehen, durch die Verunreinigungen in das Innere der Schrumpfkappe 10 eintreten können. Es versteht sich, dass dies von grundsätzlichem Nachteil ist.

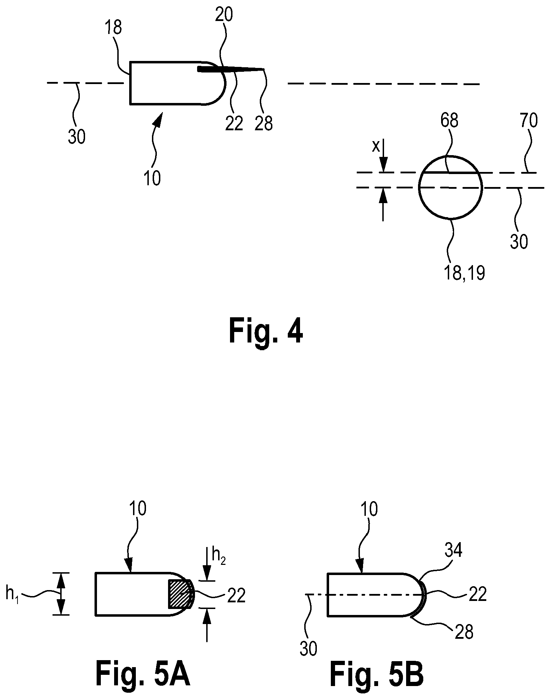

Gemäß einem dritten Ausführungsbeispiel der Schrumpfkappe 10, welches in Fig. 4, 5A und 5B gezeigt ist, kann die Schweiß- oder Prägenaht 22 parallel versetzt zu der zuvor beschriebenen ersten Symmetrieebene 30 angeordnet sein. Die Schweiß- oder Prägenaht 22 wird also mit anderen Worten nicht mittig an der Schrumpfkappe 10 erzeugt, sondern höhenversetzt zu der Symmetrieebene 30. Fig. 4 zeigt den Zwischenzustand der Schrumpfkappe 10 nach der Erzeugung der Schweiß- oder Prägenaht 22 (noch vor dem Umformen der Schweiß- oder Prägenaht 22). In diesem Zustand ist die Schrumpfkappe 10 gemäß dem dritten Ausführungsbeispiel also lediglich in einem Bereich zwischen dem ersten Ende 18 und dem zweiten Ende 20 im Wesentlichen spiegelsymmetrisch zu der ersten Symmetrieebene 30. Aufgrund der versetzten Anordnung der Schweiß- oder Prägenaht 22 ist die Schrumpfkappe 10 hier nicht gesamthaft im Wesentlichen spiegelsymmetrisch zu der ersten Symmetrieebene 30.

In Fig. 4 rechts gezeigt ist eine Draufsicht von vorne auf die Schrumpfkappe 10 durch die erste Öffnung 19 hindurch. Darin ist die Schweiß- oder Prägenaht 22 als eine parallel zu der ersten Symmetrieebene 30 versetzte Linie ersichtlich. Diese Linie ergibt sich durch die Fügefläche 68, entlang der die beiden Schrumpfschlauch-Längshälften, welche beim Erzeugen der Schweiß- oder Prägenaht 22 aufeinandergedrückt und miteinander gefügt werden, verbunden sind. Diese Fügefläche 68 verläuft beim Erzeugen der Schweiß- oder Prägenaht 22 gemäß dem in Fig. 4 schematisch gezeigten dritten Ausführungsbeispiel gesamthaft parallel versetzt zu der ersten Symmetrieebene 30. Die Fügefläche 68 liegt mit anderen Worten in einer zweiten Symmetrieebene 70, zu der die Schweiß- oder Prägenaht 22 im Wesentlichen spiegelsymmetrisch ist und die parallel versetzt zu der ersten Symmetrieebene 30 ist.

Wird die Schweiß- oder Prägenaht 22 ausgehend von dem in Fig. 4 gezeigten Zwischenzustand nun umgeformt und entweder gemäß dem ersten Ausführungsbeispiel nur teilweise oder wie gemäß dem zweiten Ausführungsbeispiel gesamthaft an die Stirnseite 24 angelegt, so steht der scharfe Rand 28 der Schweiß- oder Prägenaht 22 seitlich bzw. nach unten nun nicht mehr von der Schrumpfkappe 10 hervor (siehe Fig. 5A und 5B). Eine weitere Nachbearbeitung, z.B. ein Kürzen der Schweiß- oder Prägenaht ist nicht mehr erforderlich. Die Verletzungs- oder Beschädigungsgefahr ist auf ein Minimum reduziert.

In dem in Fig. 5A und 5B gezeigten Endzustand der Schrumpfkappe 10 ist die Schweiß-oder Prägenaht 22 zwar gesamthaft oder annähernd gesamthaft umgeklappt. Es versteht sich jedoch, dass der an die Stirnseite 24 angrenzende End- bzw. Anfangsabschnitt 34 der Schweiß- oder Prägenaht 22 nach wie vor parallel versetzt zu der beschriebenen ersten Symmetrieebene 30 ist. Mit diesem End- bzw. Anfangsabschnitt 34 ist also insbesondere die innere Begrenzungslinie der Schweiß- oder Prägenaht 22 gemeint, an der diese beginnt bzw. an der die Schweiß- oder Prägenaht in die Stirnseite 24 der Schrumpfkappe 10 übergeht.

Gemäß dem in Fig. 4, 5A und 5B gezeigten dritten Ausführungsbeispiel ist der an die Stirnseite 24 angrenzende Endabschnitt 34 der Schweiß- oder Prägenaht 22 vorzugsweise um mindestens 1/10 der Höhe h₁, weiterhin vorzugsweise um mindestens 1/5 der Höhe h₁, besonders bevorzugt um mehr als 1/3 der Höhe h₁ zu der ersten Symmetrieebene 30 versetzt. Mit der genannten Höhe h₁ ist die orthogonal zu der ersten Symmetrieebene 30 gemessene Abmessung der Schrumpfkappe 10 im Bereich des ersten Endes 18 gemeint. Der genannte Versatz ist im rechten Teil der Fig. 4 mit dem Bezugszeichen x angedeutet.

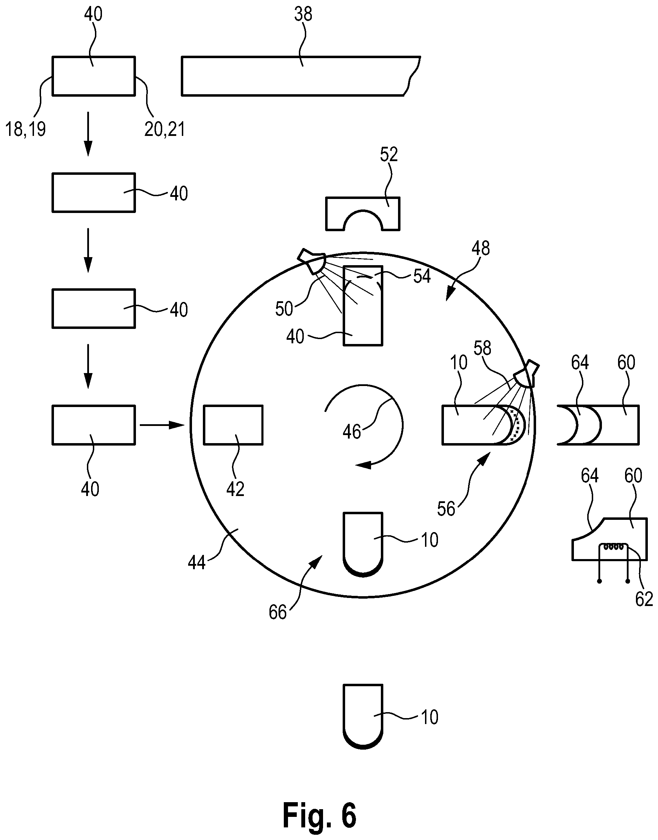

In Fig. 6 ist schematisch ein Verfahren dargestellt, mit dem die erfindungsgemäße Schrumpfkappe 10 aus einem Schrumpfschlauch 38 hergestellt werden kann.

Zunächst werden von dem Schrumpfschlauch 38 kurze Schrumpfschlauchabschnitte 40 mit gegenüberliegenden, noch offenen Enden 18, 20, welche jeweils eine Öffnung 19, 21 aufweisen, abgeschnitten. Diese Schrumpfschlauchabschnitte 40 werden dann nacheinander auf ein Profil 42 aufgeschoben, das auf einem Drehteller 44 sitzt.

Nach dem Aufschieben auf das Profil 42 wird der Drehteller 44 in Richtung des in Fig. 6 angedeuteten Pfeils 46 (hier im Uhrzeigersinn) um 90° verdreht, so dass der jeweilige Schrumpfschlauchabschnitt 40 in eine Schweißposition 48 gelangt.

An der Schweißposition 48 wird der Schrumpfschlauchabschnitt 40 durch bei 50 angedeutete Heißluft erhitzt und vorverformt, wobei gleichzeitig zwei Schweißstempel 52 auf das zweite Ende 20 des Schrumpfschlauchabschnitts 40 einwirken. Hierbei wird die zweite Öffnung 21 des Schrumpfschlauchabschnitts 40 verschlossen und die Schweiß- oder Prägenaht 22 erzeugt.

Einer dieser beiden Schweißstempel 52 ist in Fig. 6 schematisch angedeutet. Bei 54 ist ferner noch gezeigt, wo der Schweißstempel 52 an dem Schrumpfschlauchabschnitt 40 angreift. In der Regel kommen die Schweißstempel 52 von oben und von unten und pressen dabei das Schrumpfschlauchende zusammen, wobei durch die Erhitzung eine Schweiß- oder Prägenaht 22, wie in Fig. 1 oder 4 gezeigt, ausgebildet wird.

Die Schrumpfkappe 10 weist nun also den Zwischenzustand auf, der in Fig. 1 oder 4 gezeigt ist.

Der Drehteller 44 wird jetzt um weitere 90° in Richtung des Pfeils 46 verdreht, so dass die Schrumpfkappe 10 in eine Umformposition 56 gelangt. Hierbei wird die Schweiß- oder Prägenaht 22 vorzugsweise erneut mittels Heißluft 58 erhitzt, um diese leichter umformbar zu machen. Gleichzeitig wird von vorne ein Form- oder Pressstempel 60 gegen die Schweiß- oder Prägenaht 22 gedrückt, um diese umzubiegen und an die Stirnseite 24 der Schrumpfkappe 10 anzulegen bzw. anzupressen.

Der Form- bzw. Pressstempel 60 ist in Fig. 6 rechts sowohl in Draufsicht als auch in Seitenansicht schematisch gezeigt, wobei die Seitenansicht eine Heizung 62 aufweist, die statt der Heißluft 58 verwendet werden kann, um die Schweiß- oder Prägenaht 22 vor dem Verformen oder bei dem Verformen zielgenau zu erhitzen.

Der Form- bzw. Pressstempel 60 weist einen Formbereich 64 mit einer bogenförmigen Flanke auf und ist vorzugsweise an die Rundung der Stirnseite 24 der Schrumpfkappe 10 angepasst.

Wie bereits erwähnt, kann die Schweiß- oder Prägenaht 22 in diesem Verfahrensschritt zusätzlich stoffschlüssig mit der Stirnseite 24 verbunden werden, also diese zusätzlich angeschweißt oder angeklebt werden. Alternativ dazu wird sie "nur" an die Stirnseite 24 angelegt bzw. angepresst.

Abschließend dreht sich der Drehteller 44 noch einmal um 90° in Richtung des Pfeils 46, so dass die fertig hergestellte Schrumpfkappe 10 in die Ausstoßposition 66 gelangt und bspw. mittels Druckluft ausgestoßen wird. Die so hergestellte Schrumpfkappe 10 kann dann bspw. als Schüttgut auf Lager gehalten werden, bis sie zur Ummantelung eines temperaturabhängigen Schalters verwendet wird.

Es versteht sich, dass die vorliegenden Zeichnungen die Schrumpfkappe 10 sowie deren Herstellung lediglich schematisch andeuten, und dass diverse weitere geometrische oder herstellungstechnische Modifikationen vorgenommen werden können, ohne den Rahmen der vorliegenden Erfindung, wie er durch die beigefügten Ansprüche definiert wird, zu verlassen.

## Patentansprüche

1. Schrumpfkappe (10) zum Aufschieben auf einen temperaturabhängigen Schalter (12), mit einem offenen ersten Ende (18) zum Aufschieben auf den Schalter (12) und einem verschlossenen zweiten Ende (20), das durch eine Schweiß- oder Prägenaht (22) verschlossen ist, welche sich ausgehend von einer im Bereich des zweiten Endes (20) angeordneten, geschlossenen Stirnseite (24), die sich durch die Schweiß- oder Prägenaht (22) ergibt, erstreckt,
**dadurch gekennzeichnet, dass** die Schweiß- oder Prägenaht (22) derart umgeformt ist, dass ein umgeformter Teilabschnitt (32) der Schweiß- oder Prägenaht (22) unmittelbar oder unter Zwischenlage eines Fügemittels an der Stirnseite (24) anliegt.

2. Schrumpfkappe nach Anspruch 1, wobei die Schweiß- oder Prägenaht (22) ein freies Ende (26) sowie einen an die Stirnseite (24) angrenzenden Endabschnitt (34) aufweist, wobei sich der an der Stirnseite (24) unmittelbar oder unter Zwischenlage eines Fügemittels anliegende, umgeformte Teilabschnitt (32) der Schweiß- oder Prägenaht (22) über einen Bereich zwischen dem freien Ende (26) und dem an die Stirnseite (24) angrenzenden Endabschnitt (34) erstreckt.

3. Schrumpfkappe nach Anspruch 1 oder 2, wobei mehr als 50% der Fläche einer an der Stirnseite (24) anliegenden Seite (36) der Schweiß- oder Prägenaht (22) an der Stirnseite (24) unmittelbar oder unter Zwischenlage eines Fügemittels anliegt.

4. Schrumpfkappe nach einem der Ansprüche 1-3, wobei die Schweiß- oder Prägenaht (22) vollständig an der Stirnseite (24), unmittelbar oder unter Zwischenlage eines Fügemittels, anliegt.

5. Schrumpfkappe nach einem der Ansprüche 1-4, wobei der umgeformte Teilabschnitt (32) der Schweiß- oder Prägenaht (22) an die Stirnseite (24) angepresst ist.

6. Schrumpfkappe nach einem der Ansprüche 1-5, wobei der umgeformte Teilabschnitt (32) der Schweiß- oder Prägenaht (22) stoffschlüssig an der Stirnseite (24) befestigt ist.

7. Schrumpfkappe nach einem der Ansprüche 1-6, wobei die Stirnseite (24) konvex gewölbt ist.

8. Schrumpfkappe nach Anspruch 7, wobei der umgeformte Teilabschnitt (32) der Schweiß- oder Prägenaht (22) annähernd parallel zu der konvex gewölbten Stirnseite (24) verläuft.

9. Schrumpfkappe nach einem der Ansprüche 1-8, wobei die Schrumpfkappe (10) in einem Bereich zwischen dem ersten und dem zweiten Ende (18, 20) im Wesentlichen spiegelsymmetrisch zu einer ersten Symmetrieebene (30) ist, und wobei die Schweiß- oder Prägenaht (22) an ihrem an die Stirnseite (24) angrenzenden Endabschnitt (34) parallel versetzt zu der ersten Symmetrieebene (30) angeordnet ist.

10. Schrumpfkappe nach Anspruch 9, wobei eine Fügefläche (68) der Schweiß- oder Prägenaht (22) in dem an die Stirnseite (24) angrenzenden Endabschnitt (34) der Schweiß- oder Prägenaht (22) parallel versetzt zu der ersten Symmetrieebene (30) ist.

11. Schrumpfkappe nach Anspruch 9 oder 10, wobei die Stirnseite (24) eine orthogonal zu der ersten Symmetrieebene (30) gemessene Höhe (h₁) hat, und wobei die Schweiß- oder Prägenaht (22) an ihrem an die Stirnseite (24) angrenzenden Endabschnitt (34) um mindestens 1/10 der Höhe (h₁), vorzugsweise mindestens 1/5 der Höhe (h₁), parallel versetzt zu der ersten Symmetrieebene (30) angeordnet ist.

12. Schrumpfkappe nach Anspruch 11, wobei eine orthogonal zu der ersten Symmetrieebene (30) gemessene Höhe (h₂) der Schweiß- oder Prägenaht (22), welche von dem an die Stirnseite (24) angrenzenden Endabschnitt (34) der Schweiß- oder Prägenaht (22) bis zu einem freien Ende (26) der Schweiß- oder Prägenaht (22) gemessen wird, größer als die Hälfte der Höhe (h₁) der Stirnseite (24) ist.

13. Schrumpfkappe (10) nach Anspruch 1, wobei die Schweiß- oder Prägenaht (22) ein freies Ende (26) sowie einen an die Stirnseite (24) angrenzenden Endabschnitt (34) aufweist, wobei sich der an der Stirnseite (24) unmittelbar oder unter Zwischenlage eines Fügemittels anliegende, umgeformte Teilabschnitt (32) der Schweiß- oder Prägenaht (22) über einen Bereich zwischen dem freien Ende (26) und dem an die Stirnseite (24) angrenzenden Endabschnitt (34) erstreckt, und wobei sich im Bereich des an die Stirnseite (24) angrenzenden Endabschnitts (34) der Schweiß- oder Prägenaht (22) durch Umklappen der Schweiß- oder Prägenaht (22) eine Wulst ergibt, die nach vorne von der Stirnseite absteht.

14. Schrumpfkappe (10) nach einem der Ansprüche 1-13, wobei die Schweiß- oder Prägenaht (22) durch Zusammendrücken eines Schrumpfschlauchendes und Fügen der dadurch aufeinandergedrückten Schrumpfschlauch-Längshälften erzeugt ist, wobei die Schweiß- oder Prägenaht (22) in etwa die doppelte Wandstärke des übrigen Schrumpfschlauches hat.

15. Temperaturabhängiger Schalter (12) mit einer aufgeschrumpften Schrumpfkappe (10) gemäß einem der Ansprüche 1-14.
